# EUROPÄISCHE PATENTANMELDUNG

(11) **EP 4 524 067 A1**
(43) Veröffentlichungstag der Anmeldung: **19.03.2025**
(21) Anmeldenummer: 24200368.9
(22) Anmeldetag: 13.09.2024
(51) Int. Cl.: B65G 43/08, B07C 5/02, B65G 47/244

(54) **DREHANLAGE ZUM DREHEN EINES STÜCKGUTS**

(30) Priorität: 15.09.2023 DE 102023124931
(71) Anmelder: Deutsche Post AG, 53113 Bonn (DE)
(72) Erfinder: Gharz, Usama, 16348 Wandlitz (DE)
(74) Vertreter: Michalski Hüttermann & Partner Patentanwälte mbB

(57) **Zusammenfassung**

Die Erfindung betrifft eine Drehanlage (1) für eine Sortieranlage (2) zum zumindest teilweisen Drehen eines Stückguts (3), aufweisend ein Rollband (4) zum Auflegen des Stückguts (3) und ein an das Rollband (4) angrenzendes Förderband (5) zum Transportieren des Stückguts (3) entlang einer Dreheinheit (6), wobei
an dem Förderband (5) vor der Dreheinheit (6) eine ein Lichtgitter umfassende Messanlage (7) angeordnet ist, die dazu ausgestaltet ist, eine Länge und eine Breite des Stückguts (3) zu bestimmen,
die Messanlage (7) ferner eine Auswerteeinheit umfasst, die dazu ausgestaltet ist, abhängig von der gemessenen Länge und Breite des Stückguts (3) eine Diagonale des Stückguts (3) zu bestimmen,
die Dreheinheit (6) wenigstens eine an einer Außenkante (8) des Förderbands (5) angeordnete und in den Förderweg des Stückguts (3) einbringbare Richtplatte (9) zum Drehen des Stückguts (3) und eine Steuereinheit zum Steuern der Richtplatte (9) umfasst, und
die Steuereinheit dazu ausgestaltet ist, abhängig von der Diagonalen des Stückguts (3) die Richtplatte (9) auszulösen.

Auf diese Weise wird eine Anlage bereitgestellt, die die Stückgüter (3) vor der Längenbestimmung optimal ausrichtet, sodass Fehlmessungen reduziert bzw. minimiert werden können.

## Beschreibung

### Technisches Gebiet

Die Erfindung betrifft eine Drehanlage für eine Sortieranlage zum zumindest teilweisen Drehen eines Stückguts, aufweisend ein Rollband zum Auflegen des Stückguts und ein an das Rollband angrenzendes Förderband zum Transportieren des Stückguts entlang einer Dreheinheit.

Die Erfindung betrifft weiterhin ein Verfahren zum Drehen eines Stückguts mit einer Drehanlage.

### Hintergrund der Erfindung

Die Anzahl an verschickten Waren ist in den vergangenen Jahren drastisch gestiegen, sodass sich auch die Anzahl der zu bearbeitenden Sendungen in den Versandzentren deutlich erhöht hat. Um auch bei so großen Mengen eine schnelle Lieferung innerhalb kürzester Zeit anbieten zu können, ist es notwendig, dass die Sendungen bzw. Stückgüter in den Versandzentren schnell und effizient bearbeitet und sortiert werden.

In den Sortieranlagen werden die Sendungen bzw. Stückgüter auf Förderbändern aufgelegt und nicht nur nach Zielregion, sondern insbesondere in Vorsorteranlagen auch nach ihrer Größe sortiert und weiterverarbeitet bzw. auf weiteren Förderbändern weitergeleitet. Abhängig von der Größe des Stückguts können die Sendungen unterschiedlich kategorisiert werden.

Herkömmlicherweise werden in den Sortieranlagen die Stückgüter im Vorsorter vorsortiert und beispielsweise Schalen mit festen Abmessungen zugeordnet, in denen die Stückgüter über weitere Fördermöglichkeiten weiterverarbeitet werden. Abhängig von der Größe des Stückguts wird die Anzahl der benötigten Schalen ermittelt und bereitgestellt. Ein häufiges Problem liegt darin, dass die Stückgüter beim Vermessen mittels Lichtschranken häufig auf dem Förderband schief zur Förderrichtung bzw. zur Messeinheit angeordnet sind und die Maße des Stückguts nicht korrekt ermittelt werden können. Liegt ein Stückgut schräg auf dem Förderband, beginnt die Messung beispielsweise an der Ecke vorne links und endet an der Ecke hinten rechts. Dadurch wird das Stückgut als länger erkannt, als es tatsächlich ist. Daraus resultiert, dass die Stückgüter regelmäßig auf Grund fehlerhafter Messungen falsch sortiert werden. Im Beispiel der Zuordnung zu den Schalen werden regelmäßig zu viele Schalen für ein eigentlich kleines Stückgut bereitgestellt, weil das kleine Stückgut falsch vermessen und somit größer erkannt wurde, als es tatsächlich ist. Folglich werden regelmäßig Kapazitäten nicht effizient genutzt, da viele Stückgüter als größer erkannt werden, als sie tatsächlich sind und damit der Platzbedarf auf Sortieranlagen, Schalen, in Transportfahrzeugen, etc. falsch reserviert wird.

### Beschreibung der Erfindung

Davon ausgehend ist es die Aufgabe der Erfindung, eine Anlage bereitzustellen, die die Stückgüter vor der Längenbestimmung optimal ausrichtet, sodass Fehlmessungen reduziert bzw. minimiert werden können.

Diese Aufgabe wird durch den Gegenstand des Patentanspruchs 1 gelöst. Bevorzugte Weiterbildungen finden sich in den Unteransprüchen.

Erfindungsgemäß ist somit eine Drehanlage für eine Sortieranlage zum zumindest teilweisen Drehen eines Stückguts vorgesehen, aufweisend ein Rollband zum Auflegen des Stückguts und ein an das Rollband angrenzendes Förderband zum Transportieren des Stückguts entlang einer Dreheinheit, wobei an dem Förderband vor der Dreheinheit eine ein Lichtgitter umfassende Messanlage angeordnet ist, die dazu ausgestaltet ist, eine Länge und eine Breite des Stückguts zu bestimmen, die Messanlage ferner eine Auswerteeinheit umfasst, die dazu ausgestaltet ist, abhängig von der gemessenen Länge und Breite des Stückgut eine Diagonale des Stückguts zu bestimmen, die Dreheinheit wenigstens eine an einer Außenkante des Förderbands angeordnete und in den Förderweg des Stückguts einbringbare Richtplatte zum Drehen des Stückguts und eine Steuereinheit zum Steuern der Richtplatte umfasst, und die Steuereinheit dazu ausgestaltet ist, abhängig von der Diagonalen des Stückguts die Richtplatte auszulösen.

Es ist somit ein maßgeblicher Punkt der Erfindung, dass das Stückgut in der Anlage zuerst eine Messanlage zum Messen der Länge und Breite des Stückguts passiert und abhängig von der daraus ermittelten Diagonale die Dreheinheit ausgelöst wird, sodass das Stückgut gedreht wird, bevor es für die Weiterverarbeitung vermessen wird. Dabei wird jedoch nicht jedes ankommende Stückgut pauschal gedreht. Vielmehr kann gezielt ausgewählt werden, welche Stückgüter gedreht werden sollen, sodass die benötigte Zeit für die Drehvorgänge auf ein Minimum reduziert werden kann.

Ist vorliegend die Rede von einem "Stückgut" ist damit insbesondere jedes Transportgut, das sich einzeln am Stück transportieren lässt, gemeint. Als Stückgut werden beispielsweise Sendungen, Boxen, Pakete, Päckchen und/oder Schachteln gemeint.

Unter "Diagonale" ist vorliegend insbesondere die Hypotenuse eines Dreiecks gemeint, wobei die Länge und die Breite des Stückguts zwei Seiten des rechtwinkligen Dreiecks bilden.

Ist vorliegend die Rede von einer "Richtplatte" ist damit insbesondere eine plattenförmige Drehvorrichtung gemeint, die in den Förderweg des Stückguts bewegbar ist, sodass das Stückgut gegen die Richtplatte stößt und bei anhaltender Bewegung in Förderrichtung um eine Kante der Richtplatte rotiert wird. Die Richtplatte schiebt dabei das Stückgut ähnlich einer Weichenstellung. Unter "Drehen" wird vorliegend insbesondere eine Bewegung verstanden, durch die das Stückgut um wenigstens eine Achse bewegt wird, sodass es ausgerichtet wird.

Gemäß einer bevorzugten Weiterbildung der Erfindung ist die Drehanlage in eine bestehende Sortieranlage integrierbar ist, sodass das Stückgut nach dem Durchlaufen der Dreheinheit an die bestehende Sortieranlage bereitgestellt wird. Die Drehanlage kann einer bestehenden Sortieranlage voran geschaltet werden. Dazu umfasst die Drehanlage eigene Messtechnik, sodass das Messen und Drehen des Stückguts unabhängig von einer bestehenden Sortieranlage funktioniert. Nach dem Vermessen und ggf. Drehen des Stückguts wird dieses über ein Förderband der Sortieranlage bereitgestellt. Dort kann das vorab ausgerichtete Stückgut dann abhängig vom Sortiervorgang erneut gemessen werden.

Gemäß einer bevorzugten Weiterbildung der Erfindung liegt die Richtplatte in einer Grundstellung bündig an der Außenkante des Förderbands an und ist in einer aktiven Stellung in einem vorbestimmten Winkel zur Außenkante orientiert. Mit "Außenkante" ist insbesondere eine Begrenzungskante bzw. -Richtplatte gemeint, die links und rechts an der Außenseite des Förderbands angeordnet ist, um ein Herunterfallen der Stückgüter quer zur Förderrichtung zu verhindern. Die Richtplatte ist demnach derart orientiert, dass sie in der Grundstellung, also im inaktiven Zustand, flächig an der Außenkante anliegt. In diesem Zustand sind die Normalenvektoren der Außenkante und der Richtplatte parallel zueinander und beide senkrecht zur Förderrichtung. Wird die Richtplatte in die aktive Stellung bewegt, ragt sie teilweise auf das Förderband. Die Normalenvektoren der Außenkante und der Richtplatte sind nicht parallel zueinander orientiert.

Gemäß einer bevorzugten Weiterbildung der Erfindung umfasst die Richtplatte einen Linearantrieb, der dazu ausgestaltet ist, die Richtplatte zwischen der Grundstellung und der aktiven Stellung zu bewegen. Linearantriebe basieren auf verschiedenen Technologien. Sie werden unterschieden in mechanische, elektromechanische, direkte elektrische Linearantriebe, die sogenannten Linearmotoren, sowie hydraulische und pneumatische Linearantriebe. Als Linearantrieb oder Linearantriebssystem werden insbesondere alle Antriebssysteme bezeichnet, die zu einer translatorischen Bewegung führen. Linearantriebe ermöglichen die Bewegung von Maschinen und Anlagen in gerader Linie oder einem anderen vorgegebenen Verlauf. Bevorzugt umfasst der Linearantrieb einen Kolbenzylinder, besonders bevorzugt einen Pneumatikzylinder oder einen Hydraulikzylinder. Der Kolbenzylinder weist eine Kolbenstange auf, die hinein und heraus gefahren werden kann, sodass die Richtplatte in die aktive Stellung und zurück in die Grundstellung bewegt werden kann. Gemäß einer bevorzugten Weiterbildung der Erfindung ist der Linearantrieb dazu ausgestaltet, sich als Ganzes entgegen der Förderrichtung zu bewegen. Damit ist insbesondere die Bewegung des kompletten Linearantriebs und nicht die Hubbewegung gemeint. Dazu sind der Linearantrieb und/oder die Richtplatte insbesondere auf einer Montageplatte montiert. Die Montageplatte kann entgegen der Förderrichtung bewegt werden, sodass der Linearantrieb, beispielsweise der Kolbenzylinder, als Ganzes entgegen der Förderrichtung bewegt und währenddessen die Kolbenstange ausgefahren werden kann. Durch diesen zusätzlichen Freiheitsgrad kann der Linearantrieb besonders platzsparend an den Außenkanten des Förderbands angeordnet werden, sodass die Breite des Förderbands inkl. der Dreheinheit minimal gehalten werden und somit die Drehanlage platzsparend montiert werden kann. Die Montageplatte wird vorzugsweise von einem zweiten Linearantrieb angetrieben, der insbesondere um bis zu 10 cm in Längsrichtung bewegt werden kann.

Gemäß einer bevorzugten Weiterbildung der Erfindung umfasst die Dreheinheit wenigstens zwei Richtplatten. Dabei ist bevorzugt je eine Richtplatte an je einer Außenkante des Förderbands angeordnet. Beide Richtplatten sind vorzugsweise über je eine Montageplatte entgegen der Förderrichtung bewegbar, sodass das Stückgut von beiden Seiten aus, je nach berechneter Diagonale, gedreht werden kann. Jede Richtplatte und/oder Montageplatte wird über einen separaten Linearantrieb bewegt. Es werden mehrere Stellungen von den wenigstens zwei, vorzugsweise vier, Linearantrieben angesteuert, um alle in Frage kommenden Größen der Stückgüter drehen zu können.

Gemäß einer bevorzugten Weiterbildung der Erfindung ist pro Außenkante des Förderbands eine erste Richtplatte dazu ausgestaltet ist, das Stückgut senkrecht zur Förderrichtung zu bewegen und eine zweite Richtplatte dazu ausgestaltet ist, das Stückgut entlang der Förderrichtung zu bewegen. Die Drehbewegung hängt dabei vom Zeitpunkt, zu dem die jeweilige Richtplatte in die aktive Stellung bewegt wird und von der Vorwärtsbewegung durch das Förderband ab.

Gemäß einer bevorzugten Weiterbildung der Erfindung weist das Rollband an einer Stirnseite einen Auflegetisch mit einer einen Kunststoff umfassenden Gleitfläche auf. An dem Auflegetisch werden die Stückgüter auf den Auflegetisch und auf das Rollband aufgelegt. Der Auflegetisch weist dabei vorzugsweise eine Kante aus einem glatten Kunststoff auf, sodass die Gleitfähigkeit verbessert wird. Gemäß einer bevorzugten Weiterbildung der Erfindung weist der Auflegetisch wenigstens eine Lichtschranke auf, die dazu ausgestaltet ist, die Dicke und/oder die Länge und/oder die Breite des Stückguts zu bestimmen. Der Auflegetisch weist insbesondere zwei Kunststoffblöcke auf, die als Umhausung für die darunter liegenden Lichtschranken dienen. Es befinden sich bevorzugt vier Lichtschranken und ebenso viele Reflektoren unter der Umhausung und auf der gegenüberliegenden Seite.

Die Lichtschranken erkennen zu dünne Stückgüter, insbesondere Stückgüter mit einer Dicke < 1 cm, zu lange Stückgüter, insbesondere mit einer Länge > 125 cm und/oder zu kleine Sendungen, insbesondere mit einer Länge und/oder Breite < 10 cm. Wird ein nichtmaschinenfähiges Stückgut erkannt, leuchtet vorzugsweise eine Störungslampe auf. Somit gelangen weniger nicht-maschinenfähige Stückgüter auf die Anlage und es entstehen weniger Störungen.

Erfindungsgemäß ist weiterhin ein Verfahren zum Drehen eines Stückguts mit einer oben beschriebenen Drehanlage vorgesehen, mit folgenden Verfahrensschritten:
a) Auflegen eines Stückguts auf das Rollband,
b) Messen der Länge und der Breite des Stückguts mittels des Lichtgitters und Bereitstellen der Länge und der Breite des Stückguts an die Auswerteeinheit,
c) Bestimmen der Diagonalen anhand der zuvor gemessenen Länge und Breite des Stückguts mittels der Auswerteeinheit,
d) wenn die Länge der Diagonalen einen ersten vorbestimmten Grenzwert überschreitet und/oder einen zweiten vorbestimmten Grenzwert unterschreitet, dann Auslösen wenigstens einer Richtplatte zum zumindest teilweisen Drehen des Stückguts auf dem Förderband, und
e) Bereitstellen des Stückguts an eine Sortieranlage.

Es ist somit ein weiterer wesentlicher Punkt der Erfindung, dass das Stückgut zunächst in der Länge und Breite vermessen wird. Die Auswerteeinheit bestimmt dann ausgehend von der Länge und Breite des Stückguts die Länge der Diagonalen, indem ein rechtwinkliges Dreieck angenähert und die Hypotenuse bestimmt wird. Abhängig von der Länge der Diagonalen wird entschieden, ob das Stückgut überhaupt gedreht wird. Nur wenn die Länge der Diagonalen den ersten vorbestimmten Grenzwert überschreitet und/oder den zweiten vorbestimmten Grenzwert unterschreitet, bzw. innerhalb eines vorbestimmten Wertebereichs liegt, wird das Stückgut gedreht. Vorzugsweise ist vorgesehen, dass abhängig von der Länge der Diagonalen unterschiedliche viele Richtplatten angesteuert werden. Es kann somit festgelegt werden, dass nur die Stückgüter gedreht werden, die regelmäßig zu falschen Messungen und zu Fehlern in der nachgelagerten Sortierung führen.

Gemäß einer bevorzugten Weiterbildung der Erfindung umfasst das Verfahren folgende weitere Verfahrensschritte:
f) Messen einer Länge des Stückguts mittels der Lichtschranke,
g) Eingruppieren des Stückguts in wenigstens eine Gruppe A oder eine Gruppe B abhängig von der mittels der Lichtschranke gemessenen Länge des Stückguts.

Nachdem die Länge der Diagonale bestimmt und das Stückgut gedreht wurde, liegt das Stückgut in einer besseren und geraden Position, um anschließend vermessen und sortiert zu werden. Bei der Gruppe A oder Gruppe B handelt es sich insbesondere um Einschaler oder Doppelschaler. Das bedeutet, dass alle Stückgüter, die der Gruppe A zugeordnet werden, in einer Schale weitertransportiert werden. Stückgüter, die der Gruppe B zugeordnet werden, sind zu groß für eine Schale und werden in zwei Schalen bzw. einer Doppelschale transportiert. Es werden also nur die Stückgüter gedreht, die fälschlicherweise in die Gruppe B einsortiert werden können, obwohl sie tatsächlich in Gruppe A einsortiert werden könnten. Ausreichend kleine und ausreichend große Stückgüter müssen nicht gedreht werden, da sie eindeutig zugeordnet werden können. Lediglich in einem Grenzbereich zwischen den zwei Gruppen kann es zu Fehlmessungen kommen. Auf diese Weise kann der Anteil der Stückgüter, die fälschlicherweise der Gruppe B zugeordnet wurden, minimiert werden, sodass keine Kapazitäten verschwendet werden und der Sortierprozess insgesamt effizienter wird.

Bevorzugt beträgt der erste vorbestimmte Grenzwert 70 cm und/oder der zweite vorbestimmte Grenzwert 82 cm. Ein Stückgut, das beispielsweise eine Länge von 55 cm und eine Breite von 45 cm aufweist, hat eine Diagonale von 71,06 cm. Liegt dieses Stückgut also ohne Drehanlage schräg auf und wird die Diagonale fälschlicherweise als Länge bestimmt, wird das Stückgut der Gruppe B also im Beispiel oben als Doppelschaler, eingeordnet. Die Schalen weisen beispielsweise die Maße 70 cm x 80 cm auf, sodass eine Schale für das Stückgut ausreicht. Aus diesem Grund wird das Stückgut mit der Dreheinheit vorab gedreht, sodass es gerade auf dem Förderband positioniert ist und für die anschließende Längenmessung richtig ausgerichtet ist. Die Längenmessung ergibt, dass das Stückgut in Gruppe A einzuordnen ist. Es wird lediglich eine Schale für den Weitertransport reserviert und eine Schale an Kapazität gegenüber einer Sortieranlage ohne Drehanlage gewonnen. Abhängig von der Länge der Diagonalen können unterschiedlich "weite" bzw. "starke" Drehungen des Stückguts erforderlich sein. Daher werden die mehreren Richtplatten vorzugsweise abhängig von der Diagonalen gesteuert und bewegt, um die individuell notwendige Drehung des Stückguts auszulösen. Je nach Länge der Diagonalen kann insbesondere nur eine Richtplatte, zwei Richtplatten auf unterschiedlichen Seiten, drei Richtplatten oder alle vier Richtplatten in die aktive Stellung bewegt werden. Besonders bevorzugt werden je nach Länge der Diagonalen beide Richtplatten auf unterschiedlichen Seiten, durch mindestens zwei und höchstens vier Linearantriebe in die aktive Stellung bewegt.

Diese Bewegungen erfolgen entweder quer, oder quer und längs zur Förderrichtung.

### Kurze Beschreibung der Zeichnungen

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: schematisch eine Drehanlage gemäß einem bevorzugten Ausführungsbeispiel der Erfindung in einer perspektivischen Ansicht,
- Fig. 2: schematisch eine Drehanlage gemäß einem bevorzugten Ausführungsbeispiel der Erfindung in einer perspektivischen Ansicht,
- Fig. 3a: schematisch eine vereinfachte Darstellung einer Sortieranlage gemäß dem Stand der Technik in einer Draufsicht,
- Fig. 3b: schematisch eine vereinfachte Darstellung einer Drehanlage und einer Sortieranlage gemäß einem bevorzugten Ausführungsbeispiel der Erfindung in einer Draufsicht,
- Fig. 4: schematisch einen Linearantrieb gemäß einem bevorzugten Ausführungsbeispiel der Erfindung in einer perspektivischen Ansicht,
- Fig. 5: ein Flussdiagram für ein Verfahren gemäß einem bevorzugten Ausführungsbeispiel der Erfindung.

### Detaillierte Beschreibung der Ausführungsbeispiele

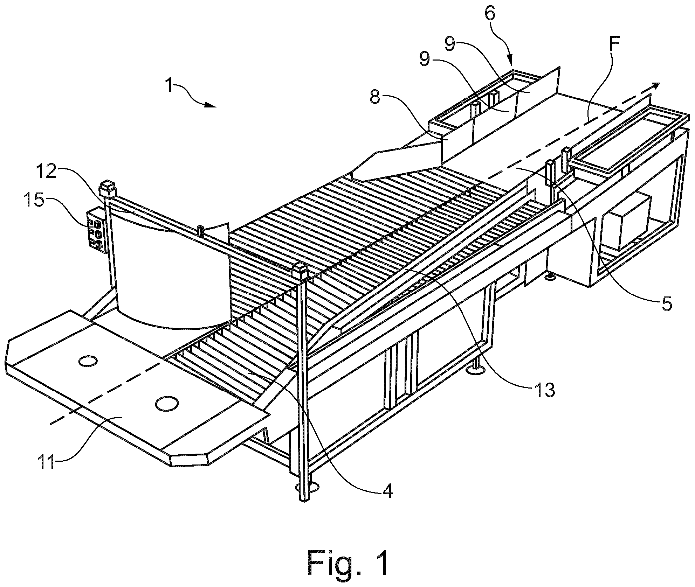

Aus Fig. 1 ist schematisch eine Drehanlage 1 gemäß einem bevorzugten Ausführungsbeispiel der Erfindung in einer perspektivischen Ansicht ersichtlich. Die Drehanlage 1 besteht aus einem Auflegetisch 11, einem an dem Auflegetisch 11 angrenzendes Rollband 4 und an ein an das Rollband 4 angrenzendes Förderband 5. Das Stückgut 3 wird auf den Auflegetisch 11 aufgelegt und in Förderrichtung F transportiert. Das Rollband 4 ist leicht abfallend angeordnet, sodass die Stückgüter 3 nicht nur in Richtung des Förderbands 5, sondern auch zur Seite in Richtung der starren Richtwange 13 bewegt werden. Über die starre Richtwange 13 wird das aufgelegte Stückgut 3 sehr grob ausgerichtet. Die Lichtschranke 12 am Auflegetisch erfasst ein erstes Mal die Länge, Breite und/oder Dicke des Stückguts 3, um nicht maschinenfähige Stückgüter zu erkennen, sodass diese aussortiert werden können. Links und rechts neben dem Förderband 5 sind Richtplatten 9 angeordnet. In Fig. 1 befinden sich die bewegbaren Richtplatten 9 in ihrer Grundstellung. Das bedeutet, dass die Richtplatten 9 bündig an der jeweiligen Außenkante 8 des Förderbands 5 anliegt. In diesem Zustand kann das Stückgut 3 die Dreheinheit 6 passieren, ohne gedreht zu werden. Dies ist dann der Fall, wenn das Stückgut 3 klein oder groß genug ist, um Fehlzuordnungen, beispielsweise als Einschaler oder Doppelschaler, zu vermeiden. Die Messanlage 7 ist der Übersicht halber in Fig. 1 nicht dargestellt.

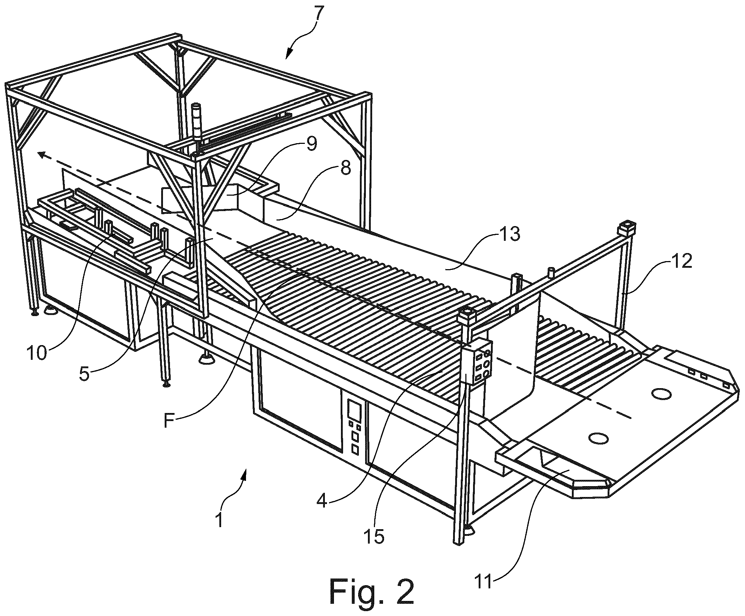

In Fig. 2 ist die Drehanlage 1 aus Fig. 1 inklusive der Messanlage 7 und mit einer Richtplatte 9 in aktiver Stellung dargestellt. Die Messanlage 7 umfasst ein Lichtgitter und ist in einem würfelförmigen Gerüst über der Dreheinheit 6 angeordnet. Auf diese Weise kann zusätzlich die Arbeitssicherheit gewährleistet werden. Die Richtplatte 9 befindet sich in der aktiven Stellung. Das bedeutet, dass die Richtplatte 9 nicht mehr bündig bzw. flächig an der Außenkante 8 des Förderbands 5 anliegt, sondern in einem Winkel zu der Außenkante 8 orientiert ist. Die Druckzylinder 10 sind seitlich des Förderbands 5 angeordnet und können die Richtplatte 9 in die aktive Stellung bewegen. Wird das Stückgut 3 nun weiter in Richtung der Förderrichtung F bewegt und stößt dabei an die hervorstehende Richtplatte 9, wird es um die zur Mitte des Förderbands 5 zeigende Kante der Richtplatte 9 rotiert. Alternativ kann das Förderband 5 gestoppt und die Richtplatte 9 herausgefahren werden, sodass das Stückgut 3 in einem statischen Zustand gedreht wird.

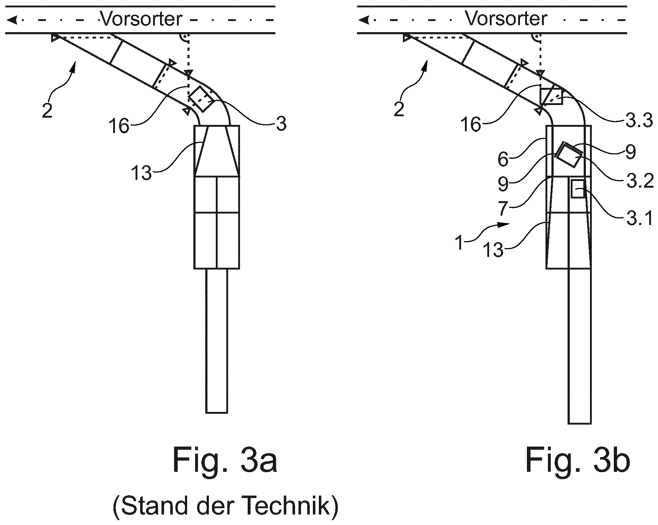

Fig. 3 zeigt eine herkömmliche Sortieranlage 2 und eine Sortieranlage 2 mit vorangestellter Drehanlage 1 gemäß einem bevorzugten Ausführungsbeispiel der Erfindung in Gegenüberstellung. In Fig. 3a ist eine herkömmliche Sortieranlage 2 gezeigt. Das Stückgut 3 wird auf das Förderband aufgelegt und über Richtwangen 13 grob ausgerichtet. Durchläuft das Stückgut 3 dann eine Kurve, liegt es schräg zur Lichtschranke 16, sodass nicht die tatsächliche Länge des Stückguts 3, sondern eine Diagonale ausgehend von der Ecke links vorne bis zur Ecke rechts hinten gemessen. Das Stückgut 3 wird als länger erkannt, als es tatsächlich ist und wird von der Sortieranlage 2 falsch eingruppiert bzw. weitertransportiert.

In Fig. 3b ist vor der Sortieranlage 2 eine Drehanlage 1 angeordnet. Die Drehanlage 1 kann modular vor der Sortieranlage 2 aufgebaut werden. Das Stückgut 3 wird auf das Rollenband 4 der Drehanlage 1 aufgelegt und über die verlängerten Richtplatten 13 grob ausgerichtet. Das Stückgut 3 befindet sich dann in der ersten Stellung 3.1. Beim Eintritt in die Dreheinheit 6 wird die Länge und die Breite des Stückguts 3 mittels der Messanlage 7 gemessen und anschließend eine Diagonale bestimmt. Ist die Länge der Diagonalen in einem vorbestimmten Grenzbereich, muss das Stückgut 3 gedreht werden, damit es anschließend von der Sortieranlage 2 korrekt erfasst werden kann. In diesem Fall werden die Richtplatten 9 in die aktive Stellung gebracht und das Stückgut 3 gedreht. Es befindet sich dann in der zweiten Stellung 3.2. Das Stückgut 3 passiert die Kurve und ist für die Lichtschranke 16 optimal ausgerichtet, damit das Stückgut in der dritten Stellung 3.3 richtig vermessen und anschließend richtig eingruppiert werden kann.

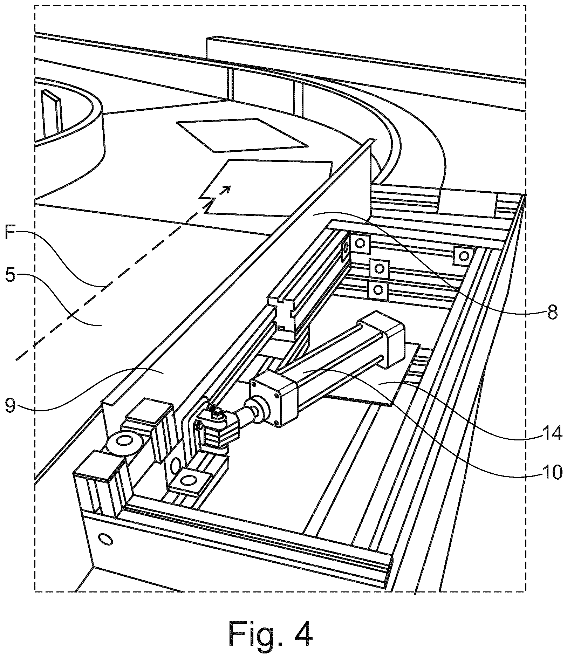

In Fig. 4 ist ein Linearantrieb 10 in Form eines Kolbenzylinders an einer Richtplatte 9 angeordnet. Die Richtplatte 9 befindet sich in der Grundstellung und ist bündig an der Außenkante 8 des Förderbands 5 anliegend. Der Kolbenzylinder ist auf einer Montageplatte 14 angeordnet und auf dieser drehbar gelagert. Die Montageplatte 14 kann entgegen der Förderrichtung F und wieder zurück verschoben werden. Wird die Richtplatte 9 also in die aktive Stellung gefahren, dann fährt nicht nur der Kolben aus, sondern der komplette Kolbenzylinder wird durch eine Bewegung der Montageplatte 14 entgegen der Förderrichtung F gedreht. Dies schafft einen zusätzlichen Freiheitsgrad und ermöglicht eine ausreichend große Bewegung bzw. Rotation, um die Richtplatte 9 in die aktive Stellung zu bewegen und reduziert gleichzeitig den Platzbedarf in Querrichtung, sodass die Drehanlage 1 besser an bestehende Anlagen integriert werden kann.

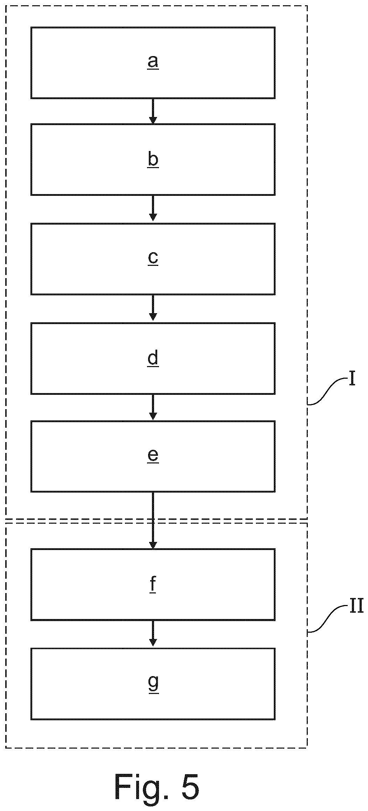

Fig. 5 zeigt ein Flussdiagram für ein Verfahren gemäß einem bevorzugten Ausführungsbeispiel der Erfindung. Dabei wird ein erster Teil I, die Schritte a bis e, von der Drehanlage 1 und ein zweiter Teil II, die Schritte f und g, von bzw. an der Sortieranlage 2 ausgeführt.

In einem ersten Schritt a) wird das Stückgut 3 auf das Rollband 4 aufgelegt. Das Stückgut 3 wird in Förderrichtung F transportiert. Es trifft auf die Messanlage 7 der Dreheinheit 6, sodass das mittels des Lichtgitters in Schritt b) die Länge und Breite des Stückguts 3 gemessen werden kann. Die Messwerte werden an eine Auswerteeinheit übermittelt, sodass in Schritt c) die Länge der Diagonalen bestimmt werden kann. In Schritt d) wird geprüft, ob die Länge der Diagonalen einen ersten vorbestimmten Grenzwert überschreitet und/oder einen zweiten vorbestimmten Grenzwert unterschreitet. Ist dies der Fall, wird das Stückgut 3 gedreht. Dazu wird das Förderband 5 angehalten und die benötigten Richtplatten 9 in die aktive Stellung gebracht. Diese Drehung ist mit einer geringen Zeitverzögerung verbunden. Sind die Richtplatten 9 wieder in ihrer Grundstellung, wird das Förderband 5 wieder gestartet. Das gedrehte Stückgut 3 wird anschließend in Schritt e) an eine angrenzende Sortieranlage 2 bereitgestellt. Dort wird die Länge des Stückguts 3 in Schritt f) gemessen und abhängig von der Länge in Schritt g) in eine Gruppe A oder in eine Gruppe B eingruppiert. Die gemessene Länge ist jetzt die tatsächliche Länge und keine fälschlicherweise als Länge gemessene Diagonale, sodass sie zuverlässig für die Eingruppierung herangezogen werden kann. Somit können Stückgüter 3, die bei einer fehlerhaften Messung der Länge auch falsch einsortiert werden, vor der Längenmessung der Sortieranlage 2 gedreht und ausgerichtet werden. Die fehlerhafte Zuteilung wird dadurch drastisch reduziert, sodass Kapazitäten effizient genutzt werden können.

### Bezugszeichenliste

- 1: Drehanlage
- 2: Sortieranlage
- 3: Stückgut
- 3.1: Stückgut in der ersten Stellung
- 3.2: Stückgut in der zweiten Stellung
- 3.3: Stückgut in der dritten Stellung
- 4: Rollband
- 5: Förderband
- 6: Dreheinheit
- 7: Messanlage
- 8: Außenkante
- 9: Richtplatte
- 10: Linearantrieb
- 11: Auflegetisch
- 12: Lichtschranke
- 13: starre Richtwange
- 14: Montageplatte
- 15: Signallampe
- 16: zweite Lichtschranke
- F: Förderrichtung
- I: erster Abschnitt
- II: zweiter Abschnitt

## Patentansprüche

1. Drehanlage (1) für eine Sortieranlage (2) zum zumindest teilweisen Drehen eines Stückguts (3), aufweisend ein Rollband (4) zum Auflegen des Stückguts (3) und ein an das Rollband (4) angrenzendes Förderband (5) zum Transportieren des Stückguts (3) entlang einer Dreheinheit (6), wobei
an dem Förderband (5) vor der Dreheinheit (6) eine ein Lichtgitter umfassende Messanlage (7) angeordnet ist, die dazu ausgestaltet ist, eine Länge und eine Breite des Stückguts (3) zu bestimmen,
die Messanlage (7) ferner eine Auswerteeinheit umfasst, die dazu ausgestaltet ist, abhängig von der gemessenen Länge und Breite des Stückguts (3) eine Diagonale des Stückguts (3) zu bestimmen,
die Dreheinheit (6) wenigstens eine an einer Außenkante (8) des Förderbands (5) angeordnete und in den Förderweg des Stückguts (3) einbringbare Richtplatte (9) zum Drehen des Stückguts (3) und eine Steuereinheit zum Steuern der Richtplatte (9) umfasst, und
die Steuereinheit dazu ausgestaltet ist, abhängig von der Diagonalen des Stückguts (3) die Richtplatte (9) auszulösen.

2. Drehanlage (1) nach Anspruch 1, wobei die Drehanlage (1) in eine bestehende Sortieranlage (2) integrierbar ist, sodass das Stückgut (3) nach dem Durchlaufen der Dreheinheit (6) an die bestehende Sortieranlage (2) bereitgestellt wird.

3. Drehanlage (1) nach Anspruch 1 oder 2, wobei die Richtplatte (9) in einer Grundstellung bündig an der Außenkante (8) des Förderbands (5) anliegt und in einer aktiven Stellung in einem vorbestimmten Winkel zur Außenkante (8) orientiert ist.

4. Drehanlage (1) nach einem der vorherigen Ansprüche, wobei die Richtplatte (9) einen Linearantrieb (10) umfasst, der dazu ausgestaltet ist, die Richtplatte (9) zwischen der Grundstellung und der aktiven Stellung zu bewegen.

5. Drehanlage (1) nach einem der vorherigen Ansprüche, wobei der Linearantrieb (10) dazu ausgestaltet ist, sich entgegen der Förderrichtung (F) zu bewegen.

6. Drehanlage (1) nach einem der vorherigen Ansprüche, wobei die Dreheinheit (6) wenigstens vier Richtplatten (9) umfasst, und zwei Richtplatten (9) an je einer Außenkante (8) des Förderbands (5) angeordnet sind.

7. Drehanlage (1) nach einem der vorherigen Ansprüche, wobei pro Außenkante (8) des Förderbands (5) eine erste Richtplatte dazu ausgestaltet ist, das Stückgut senkrecht zur Förderrichtung zu bewegen und eine zweite Richtplatte dazu ausgestaltet ist, das Stückgut entlang der Förderrichtung (F) zu bewegen.

8. Drehanlage (1) nach einem der vorherigen Ansprüche, wobei das Rollband (4) an einer Stirnseite einen Auflegetisch (11) mit einer einen Kunststoff umfassenden Gleitfläche aufweist.

9. Drehanlage (1) nach einem der vorherigen Ansprüche, wobei der Auflegetisch (11) wenigstens eine Lichtschranke (12) aufweist, die dazu ausgestaltet ist, die Dicke und/oder die Länge und/oder die Breite des Stückguts (3) zu bestimmen.

10. Verfahren zum Drehen eines Stückguts (3) mit einer Drehanlage (1) nach einem der vorherigen Ansprüche, mit folgenden Verfahrensschritten:
a) Auflegen eines Stückguts (3) auf das Rollband (4),
b) Messen der Länge und der Breite des Stückguts (3) mittels des Lichtgitters und Bereitstellen der Länge und der Breite des Stückguts (3) an die Auswerteeinheit,
c) Bestimmen der Diagonalen anhand der zuvor gemessenen Länge und Breite des Stückguts (3) mittels der Auswerteeinheit,
d) wenn die Länge der Diagonalen einen ersten vorbestimmten Grenzwert überschreitet und/oder einen zweiten vorbestimmten Grenzwert unterschreitet, dann Auslösen wenigstens einer Richtplatte (9) zum zumindest teilweisen Drehen des Stückguts (3) auf dem Förderband (5), und
e) Bereitstellen des Stückguts (3) an eine Sortieranlage (2).

11. Verfahren nach Anspruch 10, mit folgenden weiteren Verfahrensschritten:
f) Messen einer Länge des Stückguts (3) mittels einer zweiten Lichtschranke (16),
g) Eingruppieren des Stückguts (3) in wenigstens eine Gruppe A oder eine Gruppe B abhängig von der mittels der zweiten Lichtschranke (16) gemessenen Länge des Stückguts (3).
